(19) Europäisches Patentamt
European Patent Office
Office européen des brevets

(11) **EP 1 928 140 A2**

(12) **EUROPEAN PATENT APPLICATION**

(43) Date of publication:
**04.06.2008 Bulletin 2008/23**

(51) Int Cl.:
***H04L 27/26*** *(2006.01)*

(21) Application number: **07023144.4**

(22) Date of filing: **29.11.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **29.11.2006 KR 20060118891**

(71) Applicant: **Samsung Electronics Co., Ltd.**
**Suwon-si, Gyeonggi-Do (KR)**

(72) Inventors:
• **Byun, Myung-Kwang**
**Suwon-si**
**Gyeonggi-do (KR)**

• **Oh, Jeong-Tae**
**Suwon-si**
**Gyeonggi-do (KR)**
• **Jeon, Jae-Ho**
**Suwon-si**
**Gyeonggi-do (KR)**
• **Maeng, Seung-Joo**
**Suwon-si**
**Gyeonggi-do (KR)**

(74) Representative: **Boakes, Jason Carrington**
**Harrison Goddard Foote**
**106 Micklegate**
**York, YO1 6JX (GB)**

(54) **Apparatus and method for estimating noise in a communication system**

(57) A method and apparatus for estimating noise in a signal reception apparatus of a communication system are provided. The method and apparatus include a channel estimator for estimating a channel for a signal vector received from multiple cells, and a noise estimator for estimating noise using the received signal vector, a number of the cells, a number of pilot subcarriers used for the channel estimation and pilot patterns used in the cells. As provided, the noise estimation method and apparatus improve decoding performance which improves cell capacity in a communication system.

FIG.1

EP 1 928 140 A2

**Description**

## BACKGROUND OF THE INVENTION

1. Field of the Invention:

The present invention relates generally to a noise estimation apparatus and method for a communication system. More particularly, the present invention relates to an apparatus and method for estimating noise caused by interference in a communication system.

2. Description of the Related Art:

Generally, a communication system having a cellular configuration (hereinafter referred to as a 'cellular communication system'), is limited in the number of resources available to each of multiple cells which constitute the cellular communication system. Such resources include frequency resources, code resources, time slot resources, etc. which are shared by the multiple cells. The limitation of resources causes the occurrence of Inter-Cell Interference (ICI).
In the cellular communication system, although the sharing of frequency resources by multiple cells causes performance degradation due to ICI, in some cases frequency resources are reused to increase the total capacity of the cellular communication system. A ratio of reusing the frequency resources is referred to herein as a 'frequency reuse factor' and the frequency reuse factor is determined based on the number of cells which do not use the same frequency resources. If the frequency reuse factor is assumed to be $\dfrac{1}{K}$, the number of cells which do not use the same frequency resources is K.

As the frequency reuse factor is lower, i.e., if the frequency reuse factor is below 1, the ICI is also lowered. However, the amount of frequency resources available in one cell is reduced which causes a reduction in the total capacity of the cellular communication system. On the contrary, if the frequency reuse factor is 1, i.e. if all the cells constituting the cellular communication system use the same frequency resources, the ICI may increase. However, the amount of frequency resources available in one cell also increases which contributes to an increase in the overall capacity of the cellular communication system.

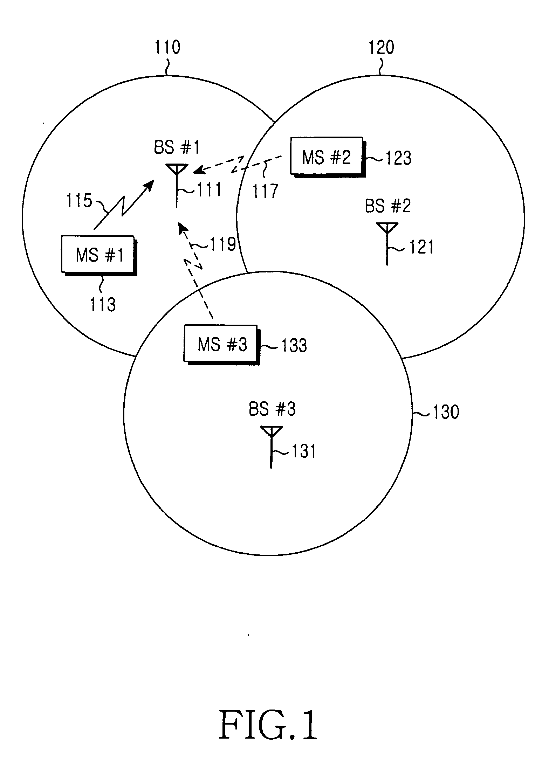

The next generation of communication systems includes an advanced system for providing Mobile Stations (MSs) with services capable of high-speed, high-capacity data transmission/reception. An Institute of Electrical and Electronics Engineers (IEEE) 802.16e communication system is a typical example of the next generation communication system. The IEEE 802.16e communication system typically employs an Orthogonal Frequency Division Multiplexing (OFDM) scheme and/or an Orthogonal Frequency Division Multiple Access (OFDMA) scheme. With reference to FIG. 1, a description will now be made of the case where ICI occurs in an IEEE 802.16e communication system.

FIG. 1 illustrates an example where an interference signal occurs in a conventional communication system.

Referring to FIG. 1, the IEEE 802.16e communication system includes a cell#1 110, a cell#2 120 and a cell#3 130. The communication system also includes a Base Station (BS) #1 111 in charge of the cell#1 110, a BS#2 121 in charge of the cell#2 120 and a BS#3 131 in charge of the cell#3 130. The communication system further includes an MS#1 113 receiving a service from the BS#1 111, an MS#2 123 receiving a service from the BS#2 121 and an MS#3 133 receiving a service from the BS#3 131. The BS#1 111, the BS#2 121 and the BS#3 131 provide the services using the same frequency resources. As described above, when the BS#1 111, the BS#2 121 and the BS#3 131 provide the services using the same frequency resources, both the uplink and downlink may suffer fatal performance degradation due to ICI.

For example, in FIG. 1, from the standpoint of MS#1 113 receiving service from BS#1 111, the signal 117 transmitted by MS#2 123 receiving service from BS#2 121 of an adjacent cell and the signal 119 transmitted by MS#3 133 receiving service from BS#3 131 of another adjacent cell may serve as interference to the signal 115 transmitted by MS#1 113. Therefore, BS# 1 111 may receive not only the signal 115 transmitted by the MS#1 113, but also the signal 117 transmitted by MS#2 123 and the signal 119 transmitted by the MS#3 133, both of which are interference signals, resulting in the performance degradation in the uplink.

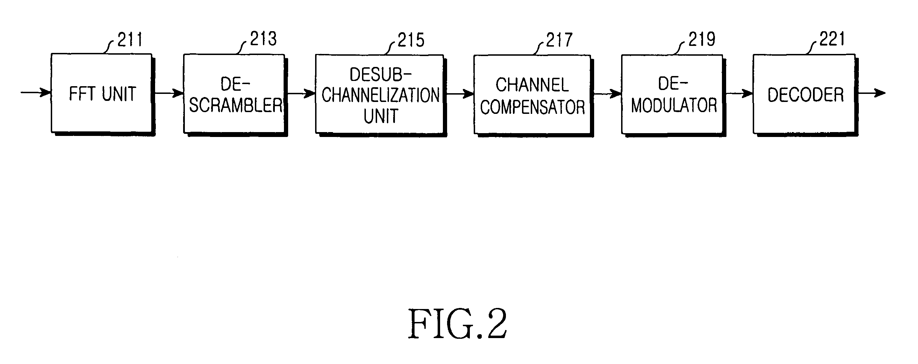

With reference to FIG. 2, a description will now be made of an internal structure of a signal reception apparatus of a conventional IEEE 802.16e communication system.

FIG. 2 illustrates an internal structure of a signal reception apparatus of a conventional IEEE 802.16e communication system.

Before a description of FIG. 2 is given, it should be noted that the signal reception apparatus can be applied to any one of the BS and the MS, and it is assumed herein that the signal reception apparatus is applied to the BS.

Referring to FIG. 2, the signal reception apparatus includes a Fast Fourier Transform (FFT) unit 211, a descrambler 213, a desubchannelization unit 215, a channel compensator 217, a demodulator 219 and a decoder 221.

A received signal is delivered to the FFT unit 211. The FFT unit 211 performs N-point FFT calculation on the received signal and outputs the resulting signal to the descrambler 213. The descrambler 213 descrambles the signal output from the FFT unit 211 according to a descrambling scheme. The descrambling scheme corresponds to the scrambling scheme used in a signal transmission apparatus corresponding to the signal reception apparatus. The descrambler 213 outputs the result to the desubchannelization unit 215.

The desubchannelization unit 215 detects and rearranges the signal output from the descrambler 213, for example, data subcarriers over which data is actually transmitted in a burst, and pilot subcarriers over which a reference signal, or pilot signal, is transmitted, and then outputs the result to the channel compensator 217. The channel compensator 217 receives the signal output from the desubchannelization unit 215, estimates channels and noises using the pilot signal, channel-compensates the data using the estimated channels and noises, and then outputs the result to the demodulator 219.

The demodulator 219 demodulates the signal output from the channel compensator 217 according to a demodulation scheme corresponding to the modulation scheme used in the signal transmission apparatus, and outputs the result to the decoder 221. The decoder 221 decodes the signal output from the demodulator 219 according to a decoding scheme corresponding to the encoding scheme used in the signal transmission apparatus, to generate burst decoded bits.

However, the signal reception apparatus described in FIG. 2 estimates noises without considering interference. Therefore, the noise estimation made without consideration of the interference reduces decoding performance of the signal reception apparatus, causing a reduction in the cell capacity.

## SUMMARY OF THE INVENTION

An aspect of the present invention is to address at least the above-mentioned problems and/or disadvantages and to provide at least the advantages described below. Accordingly, an aspect of the present invention is to provide an apparatus and method for estimating noise in a communication system.

Another aspect of the present invention is to provide an apparatus and method for estimating noise considering interference in a communication system.

Yet another aspect of the present invention is to provide an apparatus and method for estimating interference and noise separately to determine whether to apply an interference cancellation technique for particular interference, and to provide information necessary for calculation of a weight for partial interference cancellation.

According to one aspect of the present invention, an apparatus for estimating noise in a signal reception apparatus of a communication system is provided. The noise estimation apparatus includes a channel estimator for estimating a channel for a signal vector received from multiple cells and a noise estimator for estimating a noise using the received signal vector, a number of the cells, a number of pilot subcarriers used for the channel estimation, and pilot patterns used in the cells.

According to another aspect of the present invention, a method for estimating noise in a signal reception apparatus of a communication system is provided. The noise estimation method includes estimating a channel for a signal vector received from multiple cells and estimating noise using the received signal vector, a number of the cells, a number of pilot subcarriers used for the channel estimation, and pilot patterns used in the cells.

## BRIEF DESCRIPTION OF THE DRAWINGS

The above and other aspects, features and advantages of certain exemplary embodiments of the present invention will become more apparent from the following detailed description when taken in conjunction with the accompanying drawings in which:

FIG. 1 illustrates an example where an interference signal occurs in a conventional communication system;
FIG. 2 illustrates an internal structure of a signal reception apparatus of a conventional IEEE 802.16e communication system;
FIG. 3 illustrates a PUSC tile structure in a conventional IEEE 802.16e communication system;
FIG. 4 illustrates an AMC slot structure in a conventional IEEE 802.16e communication system; and
FIG. 5 illustrates an internal structure of a signal reception apparatus for an IEEE 802.16e communication system according to an exemplary embodiment of the present invention.

Throughout the drawings, it should be noted that like reference numbers are used to depict the same or similar elements, features and structures.

## DETAILED DESCRIPTION OF EXEMPLARY EMBODIMENTS

The following description with reference to the accompanying drawings is provided to assist in a comprehensive understanding of exemplary embodiments of the invention as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope and spirit of the invention. Also, descriptions of well-known functions and constructions are omitted for clarity and conciseness.

The present invention provides an apparatus and method for estimating noise caused by interference in a communication system. Although exemplary embodiments will be described herein with reference to an Institute of Electrical and Electronics Engineers (IEEE) 802.16e communication system, the noise estimation apparatus and method proposed by the present invention can be applied not only to the IEEE 802.16e communication system but also to other communication systems.

In the description of exemplary embodiments of the present invention, the terms 'cell' and 'Base Station (BS)' are used herein to have the same meaning. Although one BS can manage multiple cells, it will be assumed herein that one BS takes charges of only one cell, so the cell and the BS are used in the same meaning. This is merely for convenience and is not intended to limit the invention in any manner. In addition, although exemplary embodiments of the present invention will be described herein with reference to the case where interference between adjacent cells is considered, this is by way of example only. The invention can also be applied to a case where not only the interference between adjacent cells but also the interference between adjacent sectors in the same cell is considered. For convenience only, exemplary embodiments of the present invention will be described herein with reference to the case where only the interference between adjacent cells is considered.

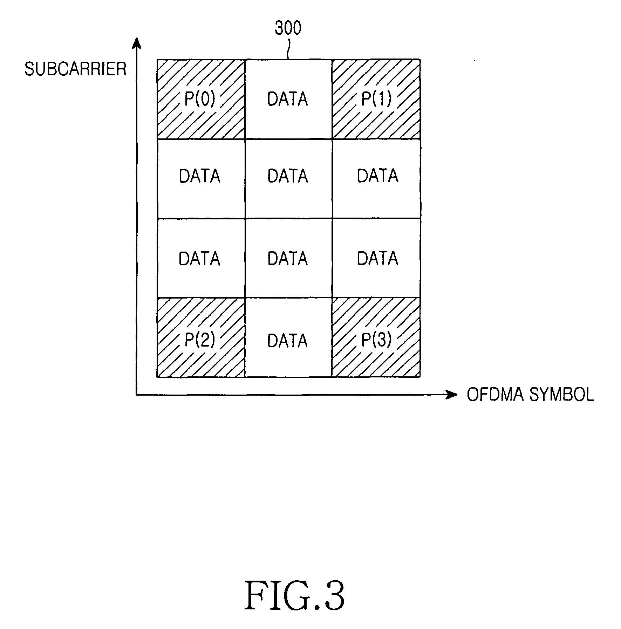

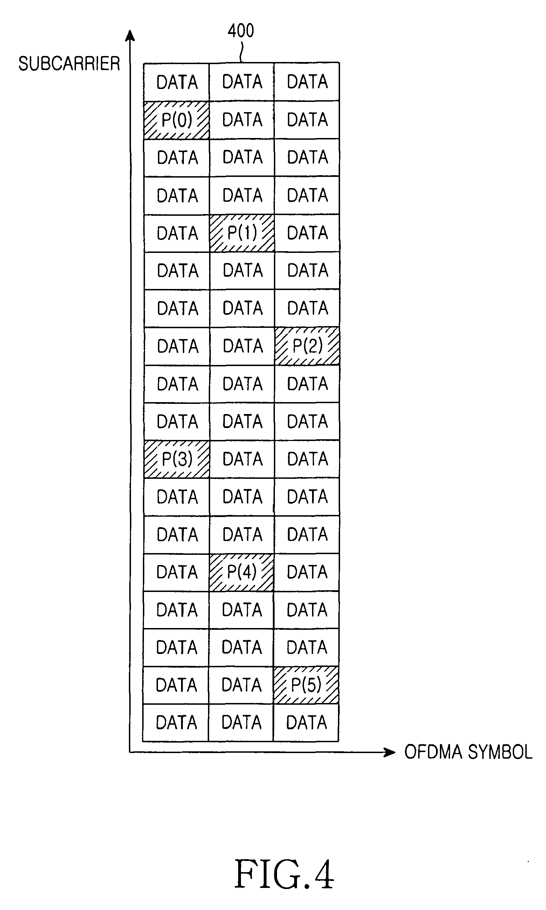

Before a description of exemplary embodiments of the present invention is given, a tile structure and a slot structure of the IEEE 802.16e communication system will be described with reference to FIGs. 3 and 4.

With reference to FIG. 3, a description will first be made of a tile structure based on a Partial Usage of Subchannels (PUSC) scheme in a conventional IEEE 802.16e communication system that uses the PUSC scheme as a subchannel scheme.

FIG. 3 illustrates a PUSC tile structure in a conventional IEEE 802.16e communication system.

Referring to FIG. 3, one tile 300 occupies 3 Orthogonal Frequency Division Multiple Access (OFDMA) symbol intervals in the time domain, and occupies 4 subcarrier intervals in the frequency domain. The tile 300 includes 4 pilot subcarriers P(0), P(1), P(2) and P(3), and 8 data subcarriers. Here, the 4 pilot subcarriers P(0), P(1), P(2) and P(3) are inserted for channel estimation for the 8 data subcarriers.

Next, with reference to FIG. 4, a description will be made of a slot structure based on an Adaptive Modulation and Coding (AMC) scheme in a conventional IEEE 802.16e communication system that uses the AMC scheme as a subchannel scheme.

FIG. 4 illustrates an AMC slot structure in a conventional IEEE 802.16e communication system.

Referring to FIG. 4, one slot 400 occupies 3 OFDMA symbol intervals in the time domain, and 18 subcarrier intervals in the frequency domain. The slot 400 includes 6 pilot subcarriers P(0), P(1), P(2), P(3), P(4) and P(5), and 48 data subcarriers. The 6 pilot subcarriers P(0), P(1), P(2), P(3), P(4) and P(5) are inserted for channel estimation for the 48 data subcarriers.

A description will now be made of a noise estimation scheme proposed by an exemplary embodiment of the present invention.

A signal received over a pilot subcarrier can be expressed as Equation (1).

$$ r = Ph + n \qquad \dots\dots\dots\dots (1) $$

In Equation (1), $r$ denotes a signal vector received over the pilot subcarrier, $P$ denotes a pilot pattern matrix of a corresponding cell and an adjacent cell, $h$ denotes a channel vector and $n$ denotes a noise vector. In Equation (1), adjacent cells considered for the pilot pattern matrix $P$ indicate adjacent cells that may give interference to the corresponding cell. That is, the pilot pattern of an adjacent cell that gives no interference to the corresponding cell, among the adjacent cells, is not considered for the pilot pattern matrix $P$. When Equation (1) is subdivided into elements of a matrix, it can be rewritten as Equation (2).

$$\begin{bmatrix} r_1 \\ r_2 \\ \vdots \\ r_N \end{bmatrix} = \begin{bmatrix} p_1(1) & p_1(2) & \cdots & p_1(K) \\ p_2(1) & p_2(2) & \cdots & p_2(K) \\ \vdots & \vdots & \ddots & \vdots \\ p_N(1) & p_N(2) & \cdots & p_N(K) \end{bmatrix} \begin{bmatrix} h(1) \\ h(2) \\ \vdots \\ h(K) \end{bmatrix} + \begin{bmatrix} n_1 \\ n_2 \\ \vdots \\ n_N \end{bmatrix} \qquad \cdots \cdots \cdots$$

$$. (2)$$

In Equation (2), $r_m$ denotes a signal received over an $m^{th}$ pilot subcarrier, and $p_m(k)$ denotes a pilot pattern applied to an $m^{th}$ pilot subcarrier of a $k^{th}$ cell. Here, $p_m(1)$ denotes a pilot pattern applied to an $m^{th}$ pilot subcarrier of a corresponding cell. Further, in Equation (2), $h(k)$ denotes a channel of a $k^{th}$ cell, $n_m$ denotes a noise of an $m^{th}$ pilot subcarrier, $N$ denotes the number of pilot subcarriers included in a channel estimation region and $K$ denotes the number of cells from which a signal is received. Herein, the channel estimation region can be a tile or a slot and a scope of the channel estimation region can vary according to the setting in the communication system.

A channel estimation and noise estimation operation in the signal reception apparatus of the communication system noticeably varies according to the presence/absence of an inverse matrix of $P^H P$. The signal reception apparatus can be applied to either of a BS and a Mobile Station(MS). In an exemplary implementation, the signal reception apparatus is applied to the BS, by way of example only. In addition, $(\cdot)^H$ is an operator indicating a conjugate transpose of the matrix.

A description of the channel estimation and noise estimation operation will be made below for an exemplary case where there is an inverse matrix of the $P^H P$ and another case where there is no inverse matrix of $P^H P$.

First, a description will be made of a channel estimation operation for the case where there is an inverse matrix of $P^H P$.

When there is an inverse matrix of $P^H P$, the channel estimation operation is performed according to Equation (3).

$$\hat{h} = \left( P^H P \right)^{-1} P^H r \qquad \cdots \cdots \cdots \cdots (3)$$

As shown in Equation (3), $K$ channels can be simultaneously estimated by multiplying the received signal vector $r$ by a pseudo-inverse matrix $(P^H P)^{-1} P^H$ of the pilot pattern matrix P.

In addition, the noise can be expressed as Equation (4), because it is obtained by subtracting a restored transmission signal from the received signal.

$$\hat{N}_0^{(old)} = \frac{1}{N} \left\| r - P\hat{h} \right\|^2 \qquad \cdots \cdots \cdots \cdots (4)$$

In Equation (4), $\hat{N}_0^{(old)}$ denotes an estimated noise value, and $\|\cdot\|^2$ is an operator indicating a sum of an absolute square of each element of a vector. If there is no error in the channel estimation operation, it is possible to accurately estimate noise in the manner shown in Equation (4). However, if there is an error in the channel estimation operation, it is not possible to accurately estimate noise in the manner shown in Equation (4). An explanation of the reason therefor is made below.

Equation (4) can be rewritten as Equation (5).

$$r - P\hat{h} = r - P(P^H P)^{-1} P^H r = \left( I_N - P(P^H P)^{-1} P^H \right) r$$
$$= \left( I_N - P(P^H P)^{-1} P^H \right)(Ph + n) = \left( I_N - P(P^H P)^{-1} P^H \right) n$$

$$\cdots \cdots \cdots (5)$$

In Equation (5), $I_N$ denotes an $N \times N$ identity matrix, and an expected value of Equation (4), calculated using Equation (5), can be expressed as Equation (6).

$$E\left[\left\|r - P\hat{h}\right\|^2\right] = E\left[Tr\left\{(r - P\hat{h})^H (r - P\hat{h})^H\right\}\right]$$

$$= E\left[Tr\left\{\left((I_N - P(P^H P)^{-1} P^H)n\right)\left((I_N - P(P^H P)^{-1} P^H)n\right)^H\right\}\right]$$

$$= Tr\left\{(I_N - P(P^H P)^{-1} P^H)E[nn^H](I_N - P(P^H P)^{-1} P^H)\right\} \quad \ldots \ldots (6)$$

$$= N_0 Tr\left\{(I_N - P(P^H P)^{-1} P^H)(I_N - P(P^H P)^{-1} P^H)\right\}$$

$$= N_0(Tr\{I_N\} - Tr\{I_K\}) = (N - K)N_0$$

In Equation (6), $E[\cdot]$ denotes an expected value of a random variable, $Tr[\cdot]$ denotes a sum of elements existing on a main diagonal of a square matrix and $N_0$ denotes noise power. As shown in Equation (6), when noise is estimated in the manner of Equation (4), noise having a value which is $\dfrac{N-K}{N}$ times less than the actual noise is generated as an estimated noise value.

Therefore, exemplary embodiments of the present invention estimate noise in the manner shown in Equation (7).

$$\hat{N}_0^{(new)} = \frac{N}{N-K}\hat{N}_0^{(old)} = \frac{1}{N-K}\left\|r - P\hat{h}\right\|^2 \quad \ldots \ldots \ldots (7)$$

Second, a description will be made of a channel estimation operation for the case where there is no inverse matrix of $P^H P$.

When there is no inverse matrix of $P^H P$, a column space of a pilot pattern matrix $P$ can span using $K'$ independent column vectors among the column vectors of the pilot pattern matrix $P$ $(K' < K)$. Here, the independence of the vectors indicates that a zero (0) vector among all linear combinations of the corresponding vectors is generated only for the case where all linear factors are 0. In addition, the column space, a kind of vector space, indicates a set of all linear combinations of a column vector. The column space is equal to a set of linear combinations of several vectors, and a minimum set of vectors is a 'basis' of the column space. The basis includes $K'$ vectors. The basis can be generated using a Gram-Schmidt orthogonalization scheme. Because the Gram-Schmidt orthogonalization scheme is a well-known technology, a detailed description will be omitted herein.

For example, when the pilot pattern matrix P is

$$\mathbf{P} = \begin{bmatrix} 1 & -1 & 1 \\ 1 & -1 & 1 \\ 1 & -1 & -1 \\ 1 & -1 & -1 \end{bmatrix},$$

a first column vector and a second column vector are not independent of each other. Therefore, the basis of the column space is a set of the first column vector and a third column vector, which are independent of each other, and it is possible to generate a modified pilot pattern matrix $P'$ including only the first column vector and the third column vector. Herein, the modified pilot pattern matrix $P'$ of the pilot pattern matrix $P$ is

$$P' = \begin{bmatrix} 1 & 1 \\ 1 & 1 \\ 1 & -1 \\ 1 & -1 \end{bmatrix}.$$

The column space of the modified pilot pattern matrix $P'$ is equal to the column space of the pilot pattern matrix $P$.

Therefore, by extracting only $K'$ independent column vectors from the pilot pattern matrix $P$ and using the modified pilot pattern matrix $P'$ including only the extracted $K'$ independent column vectors, Equation (2) can be rewritten as Equation (8).

$$\begin{bmatrix} r_1 \\ r_2 \\ \vdots \\ r_N \end{bmatrix} = \begin{bmatrix} p_1'(1) & p_1'(2) & \cdots & p_1'(K') \\ p_2'(1) & p_2'(2) & \cdots & p_2'(K') \\ \vdots & \vdots & \ddots & \vdots \\ p_N'(1) & p_N'(2) & \cdots & p_N'(K') \end{bmatrix} \begin{bmatrix} h'(1) \\ h'(2) \\ \vdots \\ h'(K') \end{bmatrix} + \begin{bmatrix} n_1 \\ n_2 \\ \vdots \\ n_N \end{bmatrix} \quad \dots \dots (8)$$

Therefore, when a channel is estimated in the manner shown in Equation (3) and a noise is estimated in the manner shown in Equation (7), the noise estimation accuracy is improved. In this case, because there is no inverse matrix of $P^H P$, the modified pilot pattern matrix $P'$ rather than the pilot pattern matrix $P$, and $K'$ rather than $K$ should be applied to Equation (3) and Equation (7). That is, Equation (3) can be expressed as Equation (9), and Equation (7) can be expressed as Equation (10).

$$\hat{\mathbf{h}} = \left(\mathbf{P'}^H \mathbf{P'}\right)^{-1} \mathbf{P'}^H \mathbf{r} \quad \dots \dots \dots (9)$$

$$\hat{\mathbf{N}}_0^{(new)} = \frac{1}{N-K} \left\| \mathbf{r} - \mathbf{P'} \hat{\mathbf{h}} \right\|^2 \quad \dots \dots \dots (10)$$

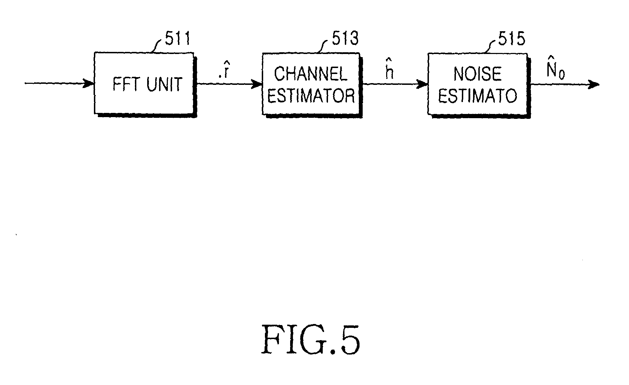

With reference to FIG. 5, a description will now be made of an internal structure of a signal reception apparatus for an IEEE 802.16e communication system according to an exemplary embodiment of the present invention.

FIG. 5 illustrates an internal structure of a signal reception apparatus for an IEEE 802.16e communication system according to an exemplary embodiment of the present invention.

Referring to FIG. 5, an exemplary signal reception apparatus includes an FFT unit 511, a channel estimator 513 and a noise estimator 515.

A received signal is delivered to the FFT unit 511. The FFT unit 511 performs N-point FFT calculation on the received signal and outputs the result to the channel estimator 513. Here, the signal output from the FFT unit 511 is a received signal vector $r$. The channel estimator 513 channel-estimates the signal output from the FFT unit 511 in the manner shown in Equation (3) and outputs the channel-estimated value $\hat{\mathbf{h}}$ to the noise estimator 515. The noise estimator 515 estimates noise in the manner shown in Equation (7) using the channel-estimated value $\hat{\mathbf{h}}$ output from the channel estimator 513 and outputs the noise-estimated value $\hat{\mathbf{N}}_0$.

As is apparent from the foregoing description, according to exemplary embodiments of the present invention, the signal reception apparatus of the communication system estimates noise considering interference, thereby facilitating accurate noise estimation. The accurate noise estimation improves decoding performance of the signal reception apparatus, contributing to an increase in the cell capacity. In addition, the signal reception apparatus estimates interference and noise separately, making it possible to determine whether to apply an interference cancellation technique for particular interference and to provide information necessary for calculation of a weight for partial interference cancellation.

While the invention has been shown and described with reference to certain exemplary embodiments thereof, it will be understood by those skilled in the art that various changes in form and details may be made therein without departing from the spirit and scope of the invention as defined by the appended claims and their equivalents.

**Claims**

1. A method for estimating noise in a signal reception apparatus of a communication system, the method comprising:

   estimating a channel for a signal vector received from multiple cells; and
   estimating noise using the received signal vector, a number of the cells, a number of pilot subcarriers used for the channel estimation and pilot patterns used in the cells.

2. The method of claim 1, wherein the estimating of the channel comprises:

   estimating the channel using the received signal vector and the pilot patterns used in the cells.

3. The method of claim 1, wherein the estimating of the channel comprises:

   estimating the channel using the received signal vector and a pilot pattern matrix indicating the pilot patterns used in the cells.

4. The method of claim 1, wherein the estimating of the channel comprises:

   estimating the channel using the following equation;

   $$\hat{h} = \left(P^H P\right)^{-1} P^H r$$

   where $\hat{h}$ denotes an estimated channel vector, $r$ denotes the received signal vector, $P$ denotes a pilot pattern matrix indicating the pilot patterns used in the cells and $(\bullet)^H$ comprises an operator indicating a conjugate transpose of the matrix.

5. The method of claim 1, wherein the estimating of the noise comprises:

   estimating the noise using an estimated noise, the received signal vector, the number of the cells and the number of pilot subcarriers used for the channel estimation, when $P$ comprises a pilot pattern matrix indicating the pilot patterns used in the cells, $(\bullet)^H$ comprises an operator indicating a conjugate transpose of the matrix and there is an inverse matrix of $P^H P$.

6. The method of claim 1, wherein the estimating of the noise comprises:

   estimating the noise using the following equation when $P$ comprises a pilot pattern matrix indicating the pilot patterns used in the cells, $(\bullet)^H$ comprises an operator indicating a conjugate transpose of the matrix and there is an inverse matrix of $P^H P$ ;

   $$\hat{\mathbf{N}}_0 = \frac{1}{N-K} \left\| \mathbf{r} - \mathbf{P}\hat{\mathbf{h}} \right\|^2$$

   where $\hat{\mathbf{N}}_0$ denotes an estimated noise, $\hat{\mathbf{h}}$ denotes an estimated channel vector, $r$ denotes the received signal vector, $K$ denotes the number of the cells and $N$ denotes the number of pilot subcarriers used for the channel estimation.

7. The method of claim 1, wherein the estimating of the noise comprises:

   estimating the noise using the received signal vector, a modified pilot pattern matrix $P'$ including $K'$ independent column vectors among column vectors of the pilot pattern matrix $P$, the number of the cells and a number of pilot subcarriers used for the channel estimation, when $P$ comprises a pilot pattern matrix indicating the pilot patterns used in the cells, $(\bullet)^H$ comprises an operator indicating a conjugate transpose of the matrix, and there is no inverse matrix of $P^H P$.

**8.** The method of claim 1, wherein the estimating of the noise comprises:

estimating the noise using the following equation when $P$ comprises a pilot pattern matrix indicating the pilot patterns used in the cells, $(\cdot)^H$ comprises an operator indicating a conjugate transpose of the matrix, and there is no inverse matrix of $P^H P$;

$$\hat{\mathbf{N}}_0 = \frac{1}{N-K} \left\| \mathbf{r} - \mathbf{P}' \hat{\mathbf{h}} \right\|^2$$

where $\hat{\mathbf{N}}_0$ denotes an estimated noise, $r$ denotes the received signal vector, $P'$ denotes a modified pilot pattern matrix including $K'$ independent column vectors among column vectors of the pilot pattern matrix $P$, $\hat{\mathbf{h}}$ denotes an estimated channel vector corresponding to the modified pilot pattern matrix, $K'$ denotes the number of the cells and $N$ denotes the number of pilot subcarriers used for the channel estimation.

**9.** The method of claim 8, wherein the $K'$ independent column vectors comprise column vectors existing when a zero (0) vector among all linear combinations of corresponding vectors is generated when all elements are 0.

**10.** An apparatus for estimating noise in a signal reception apparatus of a communication system, the apparatus comprising:

a channel estimator for estimating a channel for a signal vector received from multiple cells; and
a noise estimator for estimating a noise using the received signal vector, a number of the cells, a number of pilot subcarriers used for the channel estimation and pilot patterns used in the cells.

**11.** The apparatus of claim 10, wherein the channel estimator estimates the channel using the received signal vector and the pilot patterns used in the cells.

**12.** The apparatus of claim 10, wherein the channel estimator estimates the channel using the received signal vector and a pilot pattern matrix indicating the pilot patterns used in the cells.

**13.** The apparatus of claim 10, wherein the channel estimator estimates the channel using the following equation;

$$\hat{h} = \left( P^H P \right)^{-1} P^H r$$

where $\hat{h}$ denotes an estimated channel vector, $r$ denotes the received signal vector, $P$ denotes a pilot pattern matrix indicating the pilot patterns used in the cells and $(\cdot)^H$ comprises an operator indicating a conjugate transpose of the matrix.

**14.** The apparatus of claim 10, wherein the noise estimator estimates the noise using an estimated noise, the received signal vector, the number of the cells and the number of pilot subcarriers used for the channel estimation, when $P$ comprises a pilot pattern matrix indicating the pilot patterns used in the cells, $(\cdot)^H$ comprises an operator indicating a conjugate transpose of the matrix and there is an inverse matrix of $P^H P$.

**15.** The apparatus of claim 10, wherein the noise estimator estimates the noise using the following equation when P comprises a pilot pattern matrix indicating the pilot patterns used in the cells, $(\cdot)^H$ comprises an operator indicating a conjugate transpose of the matrix and there is an inverse matrix of $P^H P$ ;

$$\hat{\mathbf{N}}_0 = \frac{1}{N-K} \left\| \mathbf{r} - \mathbf{P}\hat{\mathbf{h}} \right\|^2$$

where $\hat{\mathbf{N}}_0$ denotes an estimated noise, $\hat{\mathbf{h}}$ denotes an estimated channel vector, $r$ denotes the received signal vector, *K* denotes the number of the cells and *N* denotes the number of pilot subcarriers used for the channel estimation.

16. The apparatus of claim 10, wherein the noise estimator estimates the noise using the received signal vector, a modified pilot pattern matrix *P'* including *K'* independent column vectors among column vectors of the pilot pattern matrix *P*, the number of the cells and the number of pilot subcarriers used for the channel estimation, when *P* comprises a pilot pattern matrix indicating the pilot patterns used in the cells, $(\cdot)^H$ comprises an operator indicating a conjugate transpose of the matrix and there is no inverse matrix of $P^H P$.

17. The apparatus of claim 10, wherein the noise estimator estimates the noise using the following equation when *P* comprises a pilot pattern matrix indicating the pilot patterns used in the cells, $(\cdot)^H$ comprises an operator indicating a conjugate transpose of the matrix and there is no inverse matrix of $P^H P$ ;

$$\hat{\mathbf{N}}_0 = \frac{1}{N-K}\left\| \mathbf{r} - \mathbf{P'}\,\hat{\mathbf{h}} \right\|^2$$

where $\hat{\mathbf{N}}_0$ denotes an estimated noise, *r* denotes the received signal vector, *P'* denotes a modified pilot pattern matrix including *K'* independent column vectors among column vectors of the pilot pattern matrix *P*, $\hat{\mathbf{h}}$ denotes an estimated channel vector corresponding to the modified pilot pattern matrix, *K'* denotes the number of the cells, and *N* denotes the number of pilot subcarriers used for the channel estimation.

18. The apparatus of claim 17, wherein the *K'* independent column vectors comprise column vectors existing when a zero (0) vector among all linear combinations of corresponding vectors is generated when all elements are 0.

FIG.1

EP 1 928 140 A2

```
   ┌─211       ┌─213          ┌─215           ┌─217          ┌─219       ┌─221
→ │ FFT UNIT │ → │  DE-   │ → │  DESUB-      │ → │ CHANNEL    │ → │  DE-    │ → │ DECODER │ →
  │          │   │SCRAMBLER│  │CHANNELIZATION│   │COMPENSATOR │   │MODULATOR│   │         │
  │          │   │        │   │   UNIT       │   │            │   │         │   │         │
  └──────────┘   └────────┘   └──────────────┘   └────────────┘   └─────────┘   └─────────┘
```

# FIG.2

300

SUBCARRIER

| P(0) | DATA | P(1) |
| DATA | DATA | DATA |
| DATA | DATA | DATA |
| P(2) | DATA | P(3) |

OFDMA SYMBOL

FIG.3

FIG.4

FIG.5